# NEW EUROPEAN PATENT SPECIFICATION

(11) **EP 0 156 405 B2**
(45) Date of publication and mention of the opposition decision: **02.03.1994**
(45) Mention of the grant of the patent: 19.10.1988
(21) Application number: 85200147.8
(22) Date of filing: 09.02.1985
(51) Int. Cl.: B21B 1/08, B21C 37/04, B23D 23/02

(54) **Roll forming procedure with slitting of angle bars and T-beams**
Profilwalzverfahren mit Längsteilung von Winkelstahl und T-Träger
Procédé de profilage avec fendage de cornières et de poutres en T.

(30) Priority: 02.03.1984 IT 8332984
(43) Date of publication of application: 02.10.1985
(73) Proprietor: DANIELI & C. OFFICINE MECCANICHE S.p.A., 33042 Buttrio (UD) (IT)
(72) Inventor: Panseri, Sergio, I-33030 Campoformido (UD) (IT)
(74) Representative: Petraz, Gilberto Luigi

(56) References cited:
- FR-A- 2 356 458
- US-A- 1 910 271
- US-A- 4 193 283
- Ernest E. Brayshaw, "Rolls and Rolling/Rails", pp. 302 to 305
- J.Puppe and G.Stauber, "Werkswalzwesen", 2nd Volume, 1934, published by Verlag Stahleisen m.b.H. and Verlag Julius Springer, Düsseldorf/Berlin, pp. 380 to 381

## Description

This invention concerns a roll forming process with slitting of T-beams. More particularly, the invention concerns a process for the production of rolled products by which the rolled product is slit lengthwise after some initial passes to reduce the rolled product itself.

According to the process of this invention such slitting of the rolled product is performed by passing it through gauges of suitably conformed rolls. This produces two rolled products which have the same cross-section and are obtained from the original rolled product and which move parallel to each other along the same rolling line, being rolled within neighbouring gauges of the rolls.

Processes are known which are employed for the re-rolling of railway rails.

Document US-A-1,910,271 discloses one of such processes which is intended for the re-employment of used rails or scrap so as to produce new sections. This process performs the initial shearing of rails into section bars having different sections. Each of such section bars, therefore, is processed independently thereafter; in fact, it is not possible to work such section bars in parallel on the same rolling train since such bars have to travel at different speeds and be worked with different rolling passes.

Document FR-A-2.356.458 discloses another process for re-rolling railway rails.

Processes are known which have the purpose of obtaining the division of rolled products so as to enable output to be increased without increasing the rolling speed. Such known processes employ knives or blades positioned along the path of the rolled product which slit such rolled product lengthwise during its travel.

The two rolled products thus obtained undergo finishing processes within appropriate gauges of the rolls.

These kind of processes, however, entails considerable shortcomings. For instance, they cannot be applied to thick sections and they also lead to heavy wear of the blades employed to slit the rolled product; such blades have therefore to be replaced very often.

Moreover, they involve the necessity of stopping the plant and therefore a loss of output, which counterbalances the increase of output obtained by slitting the rolled product.

Another known system envisages that an initial rolled bar is re-shaped as a two-stranded bar so as to provide a rolled product having a central web with a relatively thin cross-section.

The division is carried out at this thin web by means of a suitable conformation of the gauges of the rolls through which the rolled product is made to pass.

For example, US-A-4,193,283 discloses a process for obtaining round sections.

In fact, few passes are require to produce a slit round bar from an initial billet conformed with the cross-section of a two-stranded round bar.

This known process comprises passes applied to a still unslit rolled product which are of the same type as the passes applied to a slit rolled product. In other words, the passes to produce two round bars from a billet, for example a square billet, are analogous, as regards conformation of the gauges of the rolls, to passes for producing one single round bar.

It is a purpose of the present invention to provide a process for obtaining rolled T-beams which makes use of the slitting of a rolled product which has been conformed beforehand with a relatively thin median web.

According to the invention there is provided a process for roll-forming of T-beams starting from a semi-finished rolled product as a billet and comprising the steps of:
a) providing, in a first series of rolling passes, a rolled product including two relatively thick areas having the same cross-section and separated by a relatively thinner web;
b) slitting said relatively thinner web in the longitudinal direction of said rolled products and obtaining in such way two rolled products;
c) carrying out a second series of rolled passes on said rolled products, thus obtaining two T-beams, said steps a) and b) being performed by making use of rolling gauges for roll forming of I-beams, while said step c) is performed by making use of rolling gauges for rolling beams of T-shaped cross section, said beams being rotated by 90° before the last rolling pass, said rolled beams being moved in parallel on the same rolling line and being rolled within neighbouring gauges of said rolls.

As already mentioned, the process envisages the production of rolled T-beams.

In the production of such rolled products the invention envisages a differentiation of the types of roll gauges employed in the first passes and in the passes after the slitting respectively.

In fact, according to the invention the gauges employed for the first passes are characteristic of the roll forming of I-beams. After some passes of this type the rolled product is slit.

Next, each of the rolled products thus obtained and having the same cross-section undergoes further passes through specific gauges characteristic of the T-beams.

In the production of T-beams the first passes before the slitting are analogous to those normally employed to make I-beams. The passes after the slitting are instead characteristic of the T-beam.

A final rotation is adopted since the portions resulting from the slitting of the median web of the initial I-beam become the stems of the eventual T-beams.

According to the process it is possible to slit the reduced rolled product having an approximately I-shaped conformation and to subject to further roll forming passes the two resulting rolled products having an approximately T-shaped cross-section.

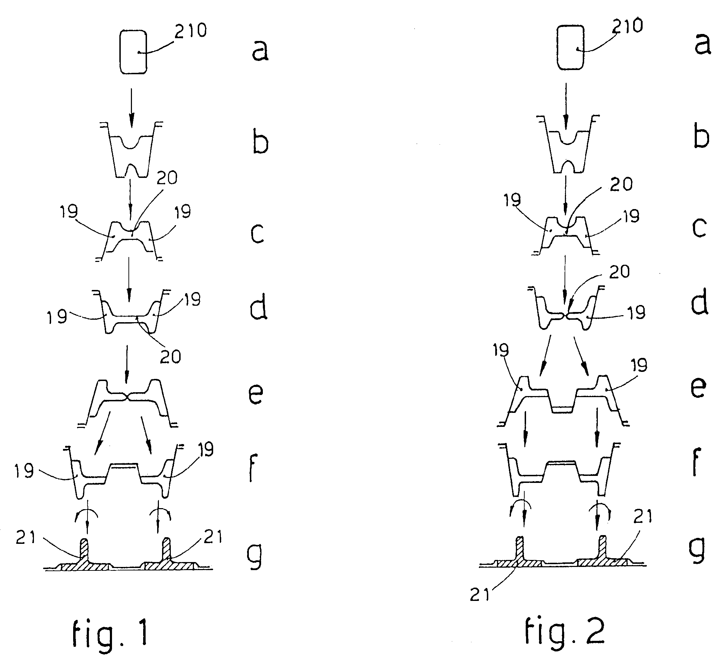

We shall describe hereinafter, as a non-restrictive example, some forms of embodiment of this invention with the help of the attached figures, in which:- Figs. 1 and 2 show sequences intended to obtain T-beams.

Fig. 1 shows a process for fabricating T-beams. An initial billet 210 having a rectangular section with its longer sides positioned vertically is conformed first of all with sections characteristic of I-beams in two successive passes "b"-"c".

Such section of an I-beam type is provided by the union of two reduced T-sections 19.

The central web 20 is reduced to a thinner cross-section thereafter in the next pass "d" and is slit to obtain two sections 19.

The sections 19 are conformed still further in passes "e"-"f" and are then rotated by 90° so as to form finished T-beams 21. In this case too the seam is eliminated by the lateral action of the grooves.

A variant of this process is shown in Fig. 2, where it is possible to see how the one single rolled product 210 of pass "a" undergoes a more marked reducing action in the first three passes "b"-"c"-"d" and is slit only in pass "e". In this way one pass with two rows is eliminated as compared to the preceding process.

Here too the slit rolled products 19 undergo rotation in passes "f"-"g" so as to obtain the finished T-beams 21.

When the process of the invention is employed to roll- form T-beams 21, it envisages simultaneous slitting of rolled products 15 or 21 which run parallel to each other. In this way only one knife is required to slit the two rolled products.

## Claims

1. Process for roll-forming of T-beams (21) starting from a semi-finished rolled product (210) as a billet and comprising the steps of:
a) providing, in a first series of rolling passes, a rolled product including two relatively thick areas having the same cross-section (19) and separated by a relatively thinner web (20);
b) slitting said relatively thinner web (20) in the longitudinal direction of said rolled products and obtaining in such way two rolled products;
c) carrying out a second series of rolled passes on said rolled products, thus obtaining two T-beams (21),
wherein said steps a) and b) are performed by making use of rolling gauges for forming of I-beams, while said step c) is performed by making use of rolling gauges for rolling beams of T-shaped cross section, said beams being rotate by 90° before the last rolling pass, said rolled beams being oven in parallel on the same rolling line and being rolled within neighbouring gauges of said rolls.

## Patentansprüche

1. Profilwalzverfahren für T-Träger (21), welches von einem halbfertigen, gewalzten Produkt 210, wie einem Strang, ausgeht, und folgende Schritte enthält:
a) in einer ersten Serie von Walzdurchgängen das Herstellen eines gewalzten Produktes, das zwei verhältnismäßig dicke Bereiche mit gleichem Querschnitt 19 aufweist, die durch einen vergleichsweise dünneren Steg 20 getrennt sind,
b) das Teilen dieses vergleichsweise dünneren Steges 20 in Längsrichtung des gewalzten Produktes, wobei auf diese Weise zwei gewalzte Produkte erhalten werden,
c) das Durchführen einer zweiten Serie von Walzdurchgängen an diesen beiden gewalzten Produkten, wobei zwei T-Träger 21 erhalten werden
wobei die Schritte a) und b) unter Verwendung von Kaliberwalzen zum Walzformen von I-Trägern durchgeführt werden, wogegen Schritt c) unter Verwendung von Kaliberwalzen zum Walzen von Trägern mit T-förmigem Querschnitt durchgeführt wird, wobei die Träger vor dem letzten Walzdurchgang um 90° gedreht werden und die gewalzten Träger auf derselben Walzstraße bewegt und in benachbarten Kalibern der Walzen gewalzt werden.

## Revendications

1. Procédé de profilage de poutres en T (21) au départ d'un produit laminé semi-fini (210) en tant que billette, comprenant les étapes suivantes :
a) l'élaboration, dans une première série de passes de laminage, d'un produit laminé comprenant deux zones relativement épaisses présentant la même section transversale (19) et séparées par une bande relativement plus mince (20);
b) le refendage de la bande relativement plus mince (20) dans le sens longitudinal des produits laminés conduisant à l'obtention de deux produits laminés;
c) l'exécution d'une seconde série de passes de laminage sur les produits laminés, donnant ainsi deux poutres en T (21),
dans lequel les étapes a) et b) sont exécutées au moyen de cannelures de laminage prévues pour profiler des poutres en I, tandis que l'étape c) est exécutée au moyen de cannelures de laminage prévues pour laminer des poutres à section transversale en T, ces poutres étant tournées de 90° avant la dernière passe de laminage, les poutres laminées étant déplacées en parallèle sur la même ligne de laminage et étant laminées dans des cannelures voisines des cylindres.
